# EUROPEAN PATENT SPECIFICATION

(11) **EP 2 549 130 B1**
(45) Date of publication and mention of the grant of the patent: **14.09.2016**
(21) Application number: 12382230.6
(22) Date of filing: 05.06.2012
(51) Int. Cl.: F16B 39/284, D06F 37/30, F16B 37/02

(54) **ELASTIC FIXING DEVICE**
ELASTISCHE BEFESTIGUNGSVORRICHTUNG
DISPOSITIF DE FIXATION ÉLASTIQUE

(30) Priority: 06.06.2011 ES 201130931
(43) Date of publication of application: 23.01.2013
(73) Proprietor: BSH Hausgeräte GmbH, 81739 München (DE)
(72) Inventor: Gracia Bobed, Ismael, 50194 Zaragoza (ES); Latre Abadía, Roberto, 50014 Zaragoza (ES); Martínez Pérez, Gerardo, 50015 Zaragoza (ES); Recio Ferrer, Eduardo, 50013 Zaragoza (ES)

(56) References cited:
- WO-A1-96/22472
- GB-A- 575 802
- GB-A- 2 412 711
- JP-A- 10 153 251
- US-A- 2 581 312

## Description

### Technical field of the invention

The present invention refers to an elastic fixing device.

The fixing device of the invention is applied, as an example, for fixing components of a washing machine, such as for fixing a drive pulley to a drum shaft or for fixing a counterweight to a tub.

### Background of the invention

The joint of the drive pulley to the drum shaft of a washing machine is a key aspect, since, if it is not a firm fixation, you can run the risk that it comes loose and makes the washing machine unusable. Therefore, fixations are required to completely avoid relative movement between the pulley and the shaft of the drum.

Fixing devices for pulleys are usually expensive and complex, since they require a very high tightening torque to guarantee the good transmission of torques generated by the motor. The three following systems are currently utilized:
- Rigid nuts of a very big metric and high torsion torques.
- Shaft of the drum with an end provided with chamfers and fixations retaining or fastening the pulleys that, in turn, have complementary chamfers such as in GB2412711. It is unavoidable that their connection has a tolerance that may cause the fixation to be released over time.
- By means of an elastic washer and a nut for applying the torque. The elastic washer maintains the torque and eliminates losses due to relaxation of the materials the joint consists of. It is a reliable connection but requires the additional washer, what makes the product more expensive and may cause errors in mounting.

Fixing devices from the state of the art based upon a rigid nut have the problem that they lose tightening torque as they are used. As an example, an initial tightening torque of 90 N·m may decrease to 70 N·m. The section of the drum shaft where the pulley is connected has therefore a chamfer on which the pulley is fitted so as to avoid the relative rotation between them in case the nut loses tightening torque. This chamfer implies the need to make the shaft a few millimeters longer.

Fixation with a chamfer needs a tolerance to introduce the orifice of the pulley, what causes that, sometimes, the pulley is mounted being turned in relation to the shaft as much as the tolerance allows. It the nut is screwed in this position, during the operation of the machine, the pulley will tend to occupy its correct position after a short time, thereby releasing the nut and demounting the fixation, what finally damages the washing machine.

Document US 2 581 312 A discloses a nut structure comprising a sheet metal body providing a base with tightening means, and a tubular portion having a threaded inner wall.

### SUMMARY OF THE INVENTION

The present invention provides a solution for the aforementioned problems by means of an elastic fixing device according to claim 1, a fixing system of a component of a washing machine according to claim 9, a washing machine according to claim 10, and a manufacturing method of the elastic fixing device according to claim 11. Preferred embodiments of the invention are defined in the dependent claims.

Thus, in a first inventive aspect, an elastic fixing device is defined, comprising an elastic washer section and a tubular portion projecting from a central area of the washer section, the tubular portion having a threaded and tightening section, characterized in that the threaded and tightening section has an outer wall with substantially polygonal external shape, which constitutes the tightening means, and a threaded inner wall, configuring a threaded axial passage or the threaded and tightening section has a threaded outer wall and a tightening inner wall with polygonal profile..

The fixing device of the invention allows a correct connection of components by means of a sole piece, with the proper tightening torque.

Furthermore, utilisation of an elastic fixing device as defined in the invention allows fixation of the pulley without a chamfer being necessary, since it does not lose tightening torque, but maintains it constantly during the machine's lifetime.

The fixing device of the invention has other advantages such as cost reduction, ease of mounting, elimination of references between pieces, and the reliability of the joint between the components.

Advantageously, the tightening means provided in the fixing device allows an easy screwing by means of a proper tool, either manual or automatic.

In an embodiment, the threaded wall of the threaded section is substantially cylindrical. In another embodiment, the threaded wall of the threaded section is substantially polygonal. In an embodiment, the threaded section is constituted by a thread extending along the edge of the tubular portion.

In an embodiment, the tightening wall has a polygonal, preferably hexagonal, outline.

In an embodiment, the tightening means comprises a polygonal profile, preferably a hexagonal profile.

The tubular portion may have a polygonal outline configuring the polygonal profile of the tightening means.

In an embodiment, the elastic fixing device comprises a flange which peripherally borders the washer section.

In an embodiment, the elastic fixing device comprises a washer section having a cross sectional profile with a rotational symmetry around the screw axis. In this case, the cross sectional profile of the washer section may comprise preferably a supporting portion and an inclined portion which is substantially inclined in relation to the supporting portion.

In a preferred embodiment, the supporting portion has a free edge spaced apart in relation to the surface on which the washer section rests in a mounted position of the elastic fixing device. The supporting portion may have a shape substantially convex in relation to the surface on which it rests. In this manner, a substantially round peripheral edge of the washer section is formed providing the advantages of avoiding scratching of the surface on which the device rests as well as to ensuring adequate sliding of the washer section against said surface during mounting of the device.

In an embodiment, the elastic fixing device is obtained in one piece, preferably by stamping a metallic sheet. In the context of the invention, the term "sheet" includes the concept of "plate".

In an embodiment in which the fixing device is obtained from a metallic sheet, the threaded axial passage is obtained by a rolling process. In an embodiment, the fixing device is made of tempered steel or spring steel. Utilisation of these materials is particularly advantageous, since, in addition to the fact that they have elastic properties required by the device, they are high-quality materials.

In a second inventive aspect, a fixing system of a component of a washing machine is defined, comprising an elastic fixing device according to the first inventive aspect.

In a third inventive aspect, a washing machine is defined, comprising an elastic fixing device according to the first inventive aspect.

In a fourth inventive aspect, a manufacturing method of an elastic fixing device according to the first inventive aspect is defined. The method comprises the following steps: stamping of a metallic sheet, so as to obtain a washer section and a tubular portion which projects from a central area of the washer section; rolling of the tubular portion, so as to obtain a threaded section of the tubular portion that constitutes the threaded axial passage; and heat treating, preferably tempering, of the stamped and rolled metallic sheet. Stamping, rolling and heat treating allow to provide the device with adequate mechanical properties such as hardness, elasticity and strength. In particular, it is possible to obtain an elastic fixing device having high yield and ultimate strength. Furthermore, the method provides the advantage related to its reduced cost and, therefore, the reduced cost of the piece manufactured by means of the same, particularly in comparison with conventional fixing nuts utilized in fixing systems of the pulley of drums of washing machines, which are obtained by lathing or machining.

In an embodiment of the manufacturing method of the elastic fixing device, the step of stamping of the metallic sheet further comprises a stamping of the metallic sheet so as to obtain a tightening section with a tightening wall having a polygonal, preferably hexagonal, profile, which constitutes the tightening means.

All features described in the present specification (including the claims, description and drawings) may be combined in any combination, except for those mutually excluding combinations of such features.

### BRIEF DESCRIPTION OF THE DRAWINGS

For a better understanding of the invention, its objects and advantages, the following figures are attached to the specification, in which it is represented:
- Figure 1: shows a fixing device according to a first embodiment of the invention.
- Figure 2: shows a top view of the fixing device according to the first embodiment.
- Figure 3: shows a fixing device according to the first embodiment of the invention in a fixation position of a pulley to a drum shaft.
- Figure 4: shows a section view of the fixing device according to the second embodiment.
- Figure 5: shows a fixing device according to the second embodiment of the invention in a fixation position of a pulley to a drum shaft.

### EMBODIMENTS OF THE INVENTION

In the figures, two embodiments of the fixing device of the invention are shown. Said device comprises a threaded axial passage (2) arranged in a central area of the fixing device, which defines a screw axis (8), an elastic washer section (1) extending from the axial passage in a radial direction away from the screw axis (8), and tightening means for facilitating the screwing of the device.

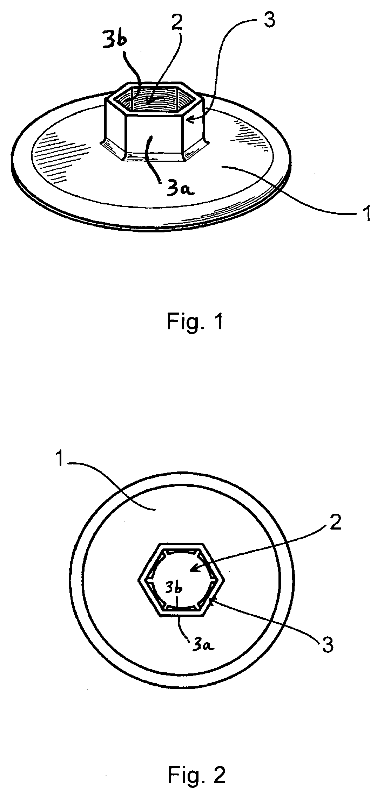

In figures 1-2, a first embodiment of the fixing device of the invention is shown. In this embodiment, the fixing device has a tubular portion (3) projecting from a central area of the washer section (1). Said tubular portion (3) has a threaded and tightening section with an outer wall (3a), which has a substantially polygonal, in particular hexagonal, external shape, which constitutes the tightening means and is internally threaded, having a threaded inner wall (3b), configuring the threaded axial passage (2). The inner shape of the tubular portion (3) is also polygonal, with the thread provided on it. In this embodiment, the tightening means is in the form of the polygonal shape of the tubular portion (3), which allows the screwing with the help of a tool of the type used for screwing nuts.

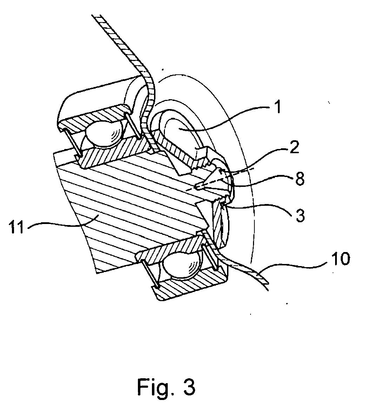

In figure 3, a fixing device according to the first embodiment is shown mounted in a washing machine for fixing the pulley (10) to the shaft (11) of the drum. It can be observed that a threaded end of the shaft (11) extends through the axial passage (2) and remains screwed with the fixing device by means of the thread provided on the inner wall of the tubular portion (3) of the same. The elastic fixing device of the invention allows fixation of the pulley (10) without a chamfer on the shaft (11) being necessary, since it does not lose tightening torque.

Advantageously, in the fixing device of the invention, both the thread and the tightening means are integrated into the own fixing device by means of a tool, even in the same area, thereby reducing the nut's height and so that it does not protrude from the rear part of the washing machine (see figure 11).

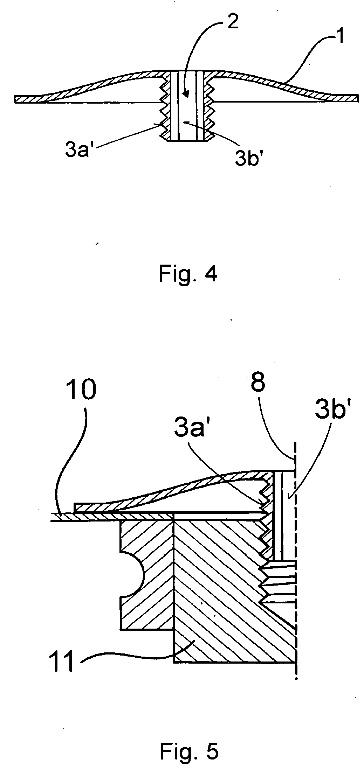

In figures 4-5, an elastic fixing device according to a second embodiment is shown, in which the axial passage (2) is externally threaded for its fixation to an element having a complementary inner thread, for example a shaft (11) with an end tubular portion which is provided with an inner thread. This embodiment has the additional advantage that, since it has no tubular portion projecting from the washer section in the direction opposed to that provided for the connection to the shaft, the height protruding from the fixing device once mounted on the shaft will be still lower than in previous embodiments.

The tightening means in this embodiment is in the form of a threaded and tightening section having a threaded outer wall (3a') and a tightening inner wall (3b') with a polygonal, preferably hexagonal profile, to allow insertion of a corresponding tightening tool. This embodiment shows the advantages of an additional reduction of the height projecting from the fixing device once mounted on the shaft, as well as a higher manufacturing simplicity allowing reduction of manufacturing costs.

Notwithstanding that the fixing device of the invention has been described making reference to its application for fixing a pulley to a drum shaft of a washing machine, it shall be understood that it is also applicable to the fixation of other elements or components, in particular of washing machines, such as a counterweight.

Preferably, the fixing device is to be manufactured from a sheet of tempered steel with a thickness of between 1.5 to 3 mm, preferably of substantially 2 mm. As an example, carbon steel C45E can be used, in accordance with the standard EN-10132. When the fixing device is manufactured from a sheet of tempered steel of approximately 2 mm thickness according to the method of the invention, it withstands a working load of 150 kg/mm². In addition to that, since the entire piece is under stress, even the thread, it has a self-braking behaviour and shows a higher resistance to be untightened.

### List of drawing references

- 1: Washer section
- 1 a: Supporting portion of washer section
- 1 b: Inclined portion of washer section
- 2: Axial passage
- 3: Tubular portion
- 3a: Outer wall of tubular portion
- 3b: Inner wall of tubular portion
- 4: Flange
- 5: Recess
- 6: Notches
- 7: Flaps
- 8: Screw axis
- 9: Tightening tool
- 10: Pulley
- 11: Shaft

## Claims

1. Elastic fixing device, comprising:
an elastic washer section (1) and a tubular portion (3) projecting from a central area of the washer section (1), **characterized in that** the tubular portion has a threaded and tightening section and has an outer wall (3a) with substantially polygonal external shape, which constitutes the tightening means, and a threaded inner wall (3b) configuring a threaded axial passage (2), or has a threaded outer wall (3a') and a tightening inner wall (3b') with polygonal profile.

2. Elastic fixing device according to claim 1, wherein the tightening wall has a hexagonal outline.

3. Elastic fixing device according to any of claims 1 to 2, wherein the threaded axial passage (2) defines a screw axis (8) and the washer section has a cross sectional profile with rotational symmetry around the screw axis (8).

4. Elastic fixing device according to claim 3, wherein the cross sectional profile has a supporting portion (1a) and an inclined portion (1b) which is substantially inclined in relation to the supporting portion (1a).

5. Elastic fixing device according to claim 4, wherein the supporting portion (1a) has a substantially convex portion.

6. Elastic fixing device according to any of claims 1 to 5, which is in one piece.

7. Elastic fixing device according to claim 6, wherein it is obtained by stamping of a metal sheet.

8. Elastic fixing device according to any of the preceding claims, wherein it is made of tempered steel or spring steel.

9. Fixing system of a component of a washing machine, especially of a component such as a drive pulley connected to a drum shaft or a counterweight of the oscillating group, comprising an elastic fixing device according to one of claims 1 to 8.

10. Washing machine comprising a fixing system of a component of a washing machine according to claim 9.

11. Manufacturing method of an elastic fixing device according to one of claims 1 to 8, **characterized in that** the method comprises the following steps:
stamping of a metal sheet, so as to obtain a elastic washer section (1) and a tubular
portion (3) which projects from a central area of the washer section (1) and having a tightening section with a tightening wall having a polygonal, preferably hexagonal, profile, which constitutes a tightening means;
rolling of the tubular portion (3), so as to obtain a threaded section with a threaded wall, such that the tubular portion (3) has an outer wall (3a) with substantially polygonal external shape and a threaded inner wall (3b) configuring a threaded axial passage (2) or has a threaded outer wall (3a') and a tightening inner wall (3b') with polygonal profile; and
heat treating of the stamped and rolled metal sheet.

12. Manufacturing method of an elastic fixing device according to claim 11, wherein the heat treating of the stamped and rolled metal sheet is by tempering.

## Patentansprüche

1. Elastische Befestigungsvorrichtung, welche umfasst:
einen elastischen Scheibenabschnitt (1) und einen rohrförmigen Abschnitt (3), der von einem mittleren Bereich des Scheibenabschnitts (1) vorsteht, **dadurch gekennzeichnet, dass** der rohrförmige Abschnitt einen mit einem Gewinde versehenen und zum Festziehen bestimmten Teilabschnitt aufweist und eine Außenwand (3a) mit im Wesentlichen polygonaler äußerer Form, welche das Festziehmittel bildet, und eine mit einem Gewinde versehene Innenwand (3b), die einen axialen Durchgang (2) begrenzt, aufweist, oder eine mit einem Gewinde versehene Außenwand (3a') und eine zum Festziehen bestimmte Innenwand (3b') mit polygonalem Profil aufweist.

2. Elastische Befestigungsvorrichtung nach Anspruch 1, wobei die zum Festziehen bestimmte Wand einen sechseckigen Umriss aufweist.

3. Elastische Befestigungsvorrichtung nach einem der Ansprüche 1 bis 2, wobei der mit einem Gewinde versehene axiale Durchgang (2) eine Schraubenachse (8) definiert und der Scheibenabschnitt ein Querschnittsprofil aufweist, das rotationssymmetrisch bezüglich der Schraubenachse (8) ist.

4. Elastische Befestigungsvorrichtung nach Anspruch 3, wobei das Querschnittsprofil einen Stützabschnitt (1a) und einen geneigten Abschnitt (1b), welcher im Wesentlichen bezüglich des Stützabschnitts (1a) geneigt ist, aufweist.

5. Elastische Befestigungsvorrichtung nach Anspruch 4, wobei der Stützabschnitt (1a) einen im Wesentlichen konvexen Abschnitt aufweist.

6. Elastische Befestigungsvorrichtung nach einem der Ansprüche 1 bis 5, welche aus einem Stück besteht.

7. Elastische Befestigungsvorrichtung nach Anspruch 6, wobei sie durch Tiefziehen einer Metallplatte hergestellt wird.

8. Elastische Befestigungsvorrichtung nach einem der vorhergehenden Ansprüche, wobei sie aus angelassenem Stahl oder Federstahl hergestellt ist.

9. Befestigungssystem einer Komponente einer Waschmaschine, insbesondere einer Komponente wie etwa einer mit einer Trommelwelle verbundenen Antriebsscheibe oder eines Gegengewichts der Schwinggruppe, welches eine elastische Befestigungsvorrichtung nach einem der Ansprüche 1 bis 8 umfasst.

10. Waschmaschine, welche ein Befestigungssystem einer Komponente einer Waschmaschine nach Anspruch 9 umfasst.

11. Herstellungsverfahren für eine elastische Befestigungsvorrichtung nach einem der Ansprüche 1 bis 8, **dadurch gekennzeichnet, dass** das Verfahren die folgenden Schritte umfasst:
Tiefziehen einer Metallplatte, um einen elastischen Scheibenabschnitt (1) und einen rohrförmigen Abschnitt (3), welcher von einem mittleren Bereich des Scheibenabschnitts (1) vorsteht und einen zum Festziehen bestimmten Teilabschnitt mit einer Festziehwand mit einem polygonalen, vorzugsweise sechseckigen Profil, welche ein Festziehmittel bildet, aufweist, zu erhalten;
Walzen des rohrförmigen Abschnitts (3), um einen mit einem Gewinde versehenen Teilabschnitt mit einer mit einem Gewinde versehenen Wand zu erhalten, sodass der rohrförmige Abschnitt (3) eine Außenwand (3a) mit im Wesentlichen polygonaler äußerer Form und eine mit einem Gewinde versehene Innenwand (3b), die einen axialen Durchgang (2) begrenzt, aufweist, oder eine mit einem Gewinde versehene Außenwand (3a') und eine zum Festziehen bestimmte Innenwand (3b') mit polygonalem Profil aufweist; und
Wärmebehandeln der tiefgezogenen und gewalzten Metallplatte.

12. Herstellungsverfahren für eine elastische Befestigungsvorrichtung nach Anspruch 11, wobei die Wärmebehandlung der tiefgezogenen und gewalzten Metallplatte durch Anlassen erfolgt.

## Revendications

1. Dispositif de fixation élastique, comprenant :
un corps de rondelle élastique (1) et une portion tubulaire (3) en saillie à partir d'une zone centrale du corps de rondelle (1), **caractérisé en ce que** la portion tubulaire possède une section vissable et de serrage et présente une paroi extérieure (3a) à forme externe substantiellement polygonale, qui constitue les moyens de serrage, et une paroi intérieure taraudée (3b) ménageant un passage axial taraudé (2), ou présente une paroi extérieure filetée (3a') et une paroi de serrage intérieure (3b') à profil polygonal.

2. Dispositif de fixation élastique selon la revendication 1,
dans lequel la paroi de serrage a un contour hexagonal.

3. Dispositif de fixation élastique selon l'une quelconque des revendications 1 à 2, dans lequel le passage axial taraudé (2) définit un axe de vis (8) et le corps de rondelle a un profil de section transversale à axe de symétrie en rotation autour de l'axe de vis (8).

4. Dispositif de fixation élastique selon la revendication 3, dans lequel le profil de section transversale présente une portion de support (1 a) et une portion inclinée (1 b) qui est substantiellement inclinée par rapport à la portion de support (1a).

5. Dispositif de fixation élastique selon la revendication 4, dans lequel la portion de support (1 a) présente une portion substantiellement convexe.

6. Dispositif de fixation élastique selon l'une quelconque des revendications 1 à 5, qui est d'une pièce.

7. Dispositif de fixation élastique selon la revendication 6, celui-ci étant obtenu par poinçonnage d'une tôle métallique.

8. Dispositif de fixation élastique selon l'une quelconque des revendications précédentes, celui-ci étant réalisé en acier trempé ou en acier à ressort.

9. Système de fixation d'un composant d'une machine à laver, en particulier d'un composant tel qu'une poulie d'entraînement reliée à un arbre de tambour ou un contrepoids du groupe oscillant, comprenant un dispositif de fixation élastique selon l'une des revendications 1 à 8.

10. Machine à laver comprenant un système de fixation d'un composant d'une machine à laver selon la revendication 9.

11. Méthode de fabrication d'un dispositif de fixation élastique selon l'une des revendications 1 à 8, **caractérisée en ce que** la méthode comprend les étapes suivantes :
poinçonnage d'une tôle métallique, de sorte à obtenir un corps de rondelle élastique (1) et une portion tubulaire (3) qui est en saillie à partir d'une zone centrale du corps de rondelle (1), et possédant une section de serrage avec une paroi de serrage ayant un profil polygonal, de préférence hexagonal, qui constitue des moyens de serrage ;
décolletage de la portion tubulaire (3), de sorte à obtenir une section vissable avec une paroi vissable, de telle sorte que la portion tubulaire (3) présente une paroi extérieure (3a) à forme externe substantiellement polygonale et une paroi intérieure taraudée (3b) ménageant un passage axial taraudé (2), ou présente une paroi extérieure filetée (3a') et une paroi de serrage intérieure (3b') à profil polygonal ; et
traitement à chaud de la tôle poinçonnée et décolletée.

12. Méthode de fabrication d'un dispositif de fixation élastique selon la revendication 11, dans laquelle le traitement à chaud de la tôle poinçonnée et décolletée se fait par trempe.
